# EUROPÄISCHE PATENTSCHRIFT

(11) **EP 1 424 904 B1**
(45) Veröffentlichungstag und Bekanntmachung des Hinweises auf die Patenterteilung: **27.07.2005**
(21) Anmeldenummer: 02750910.8
(22) Anmeldetag: 10.05.2002
(51) Int. Cl.: A22C 13/00

(54) **RAUCHDURCHLÄSSIGE NAHRUNGSMITTELHÜLLE AUF POLYAMIDBASIS**
SMOKE-PERMEABLE POLYAMIDE-BASED FOOD CASING
ENVELOPPE ALIMENTAIRE PERMEABLE A LA FUMEE A BASE DE POLYAMIDES

(30) Priorität: 18.05.2001 DE 10125207
(43) Veröffentlichungstag der Anmeldung: 09.06.2004
(73) Patentinhaber: Kalle GmbH, 65203 Wiesbaden (DE)
(72) Erfinder: DELIUS, Ulrich, 60529 Frankfurt (DE); SCHMIDT, Michael, 65375 Oestrich-Winkel (DE)
(74) Vertreter: Plate, Jürgen, Dr.
(86) Internationale Anmeldenummer: PCT/EP2002/005128
(87) Internationale Veröffentlichungsnummer: WO 2002/094023

(56) Entgegenhaltungen:
- EP-A- 0 573 306
- EP-A- 0 675 167
- EP-A- 0 899 290
- EP-A- 0 962 145
- WO-A-00/40093
- DE-A- 3 943 024
- DE-A- 4 141 292
- US-A- 4 501 861
- US-A- 4 952 431
- DATABASE WPI Section Ch, Week 198324 Derwent Publications Ltd., London, GB; Class A23, AN 1983-57624K XP002219632 & JP 58 076431 A (MITSUBISHI GAS CHEM. CO. INC.), 9. Mai 1983 (1983-05-09)

## Beschreibung

Die vorliegende Erfindung betrifft eine rauchdurchlässige, nahtlose, schlauchförmige, biaxial orientierte und thermofixierte Nahrungsmittelhülle auf Polyamidbasis. Sie ist besonders geeignet als künstliche Wursthülle für geräucherte Wurstsorten.

Zur Herstellung von geräucherten Wurstwaren sind bisher hauptsächlich Hüllen auf Basis von regenerierter Cellulose oder von Kollagen eingesetzt worden. Die Herstellung dieser Hüllen ist jedoch technisch aufwendig. So werden Cellulosehüllen in der Regel nach dem Viskoseverfahren hergestellt In diesem Verfahren wird Cellulose zunächst mit Hilfe von Natronlauge und Schwefelkohlenstoff (CS₂) in Cellulosexanthogenat umgewandelt. Die dabei entstehende sogenannte Viskoselösung muß zunächst mehrere Tage reifen, bevor sie den Darmspinnmaschinen zugeleitet wird. Diese Maschinen bestehen im wesentlichen aus einer Spinndüse, Fällbädern, Wasch- und Präparationsbädem sowie Trockenstationen. In den Fällbädern wird das Cellulosexanthogenat zu Cellulose regeneriert. Kollagendärme, auch bezeichnet als Hautfaserdärme, bestehen aus gehärtetem Bindegewebseiweiß. Bei ihrer Herstellung wird zunächst Bindegewebe aus Tierhäüten mechanisch zerkleinert und chemisch aufgeschlossen. Die dabei entstehende homogenisierte Masse wird dann in einem Trocken- oder Naßspinnverfahren weiterverarbeitet. Im Naßspinnverfahren wird die Kollagenmasse nach dem Extrudieren durch eine Ringdüse in einem koagulierend wirkenden Fällbad regeneriert (G. Effenberger, Wursthüllen - Kunstdarm, Holzmann-Buchverlag, Bad Wörishofen, 2. Aufl. [1991] S. 21 - 27).

Cellulose- und Kollagenhüllen sind nicht nur für Rauch, sondern auch für Wasserdampf sehr gut durchlässig. Die Durchlässigkeit beträgt allgemein mehr als 500 g/m² · d. Durch die hohe Wasserdampfdurchlässigkeit der Hülle trocknet die Wurst jedoch in unerwünschter Weise aus, wenn sie einige Zeit gelagert wird.

Hüllen für ungeräucherte Wurstwaren werden heute in großem Umfang aus thermoplastischen Kunststoffen hergestellt. Übliche Kunststoffe sind Polyamide, Polyester und Vinyliden chlorid-Copolymere. Die Hüllen können ein- oder mehrschichtig hergestellt werden. In den mehrschichtigen Hüllen sind häufig noch Schichten aus Polyolefin vorhanden. Der entscheidende Vorteil dieser Hüllen liegt in der technisch relativ einfachen und kostengünstigen Herstellung. Hüllen aus thermoplastischem Kunststoff haben eine Wasserdampfdurchlässigkeit (WDD) von etwa 3 bis 20 g/m² · d. Sie sind damit deutlich weniger durchlässig als Hüllen aus regenerierter Cellulose oder Kollagen. Wurstwaren in einer solchen Hülle verlieren daher bei der Lagerung deutlich weniger an Gewicht. Aus thermoplastischem Kunststoff, etwa aus Polyamid, hergestellte Hüllen wurden bisher allgemein für nicht rauchdurchlässig und damit nicht räucherbar gehalten.

Es hat jedoch auch bereits einige räucherbare Kunststoffhüllen beschrieben. So ist in der EP-A 139 888 ein Verfahren zum Räuchern von Lebensmitteln in einer Hülle aus aliphatischem Polyamid offenbart. Das Polyamid nimmt mindestens 3, bevorzugt mindestens 5 % seines Gewichts an Wasser auf. Geräuchert wird daher in Gegenwart von Wasser oder Wasserdampf, was eine klimageregelte Räucherkammer erfordert.

Eine räucherbare Folie zur Verpackung von Lebensmitteln ist auch in der EP-A 217 069 beschrieben. Sie umfaßt mindestens eine Schicht, die aus einem Gemisch von Polyamid, einem Ethylen/Vinylalkohol-Copolymer (EVOH) und Polyolefin besteht, wobei die Bestandteile der Schicht in einem bestimmten Gewichtsverhältnis stehen müssen. Die Schicht hat eine Wasserdampfdurchlässigkeit von weniger als 40 g/m² · d bei einer Temperatur von 40 °C und einer relativen Luftfeuchte von 90 %. Problematisch ist die Herstellung der Hülle. Polyamide haben einen hohen Schmelzpunkt. So hat PA 6 einen Schmelzpunkt von 220 °C, PA 66 sogar von 260 °C. Das EVOH beginnt sich dagegen bei Temperaturen oberhalb von 200 °C zu zersetzen. Bei der Herstellung der Folie ist die Einstellung der richtigen Extrusionstemperatur damit entsprechend kritisch.

Es besteht damit nach wie vor die Aufgabe, eine Kunststoffhülle zur Verfügung zu stellen, die für Rauch eine sehr gute Durchlässigkeit aufweist, ohne daß besondere Bedingungen (bestimmte Luftfeuchtigkeit, bestimmte Temperatur usw.) beim Räuchern eingehalten werden müssen. Insbesondere soll eine Räucherung unter den bei der Brühwurstherstellung üblichen Bedingung möglich sein, d.h. es soll Heißrauch eingesetzt werden können. Zudem soll es möglich sein, die Brühwurst gleichzeitig zu erhitzen und zu räuchern. Die darüber hinaus kostengünstig und einfach herstellbar ist. Insbesondere sollen bei der Extrusion keine Zersetzungserscheinungen auftreten. Die Wasserdampfdurchlässigkeit der Hülle soll deutlich unterhalb von 500 g/m² · d betragen, damit die Nahrungsmittel nach dem Räuchern möglichst wenig austrocknen.

Gefunden wurde nunmehr, daß sich die Aufgabe lösen läßt mit einer Hülle, die mit einem Gemisch hergestellt ist, das aliphatisches Polyamid und/oder aliphatisches Copolyamid, ein mit Glykol oder Polyglykol modifiziertes Polyamid und einen Blasenbildner umfaßt.

Gegenstand der vorliegenden Erfindung ist somit eine rauchdurchlässige, nahtlose, schlauchförmige, biaxial orientierte und thermofixierte Nahrungsmittelhülle auf Polyamidbasis, die dadurch gekennzeichnet ist, daß sie ein Gemisch umfaßt aus
- mindestens einem aliphatischen Polyamid und/oder mindestens einem aliphatischen Copolyamid,
- mindestens einem aliphatischen und/oder teilaromatischen Polyamid oder mindestens einem aliphatischen und/oder teitaromatischen Copolyamid, das jeweils modifiziert ist mit Glykol oder Polyglykol, und
- mindestens einem Blasenbildner.

Das aliphatische Polyamid oder Copolyamid ist bevorzugt Poly(ε-caprolactam), auch bezeichnet als PA 6, ein Copolyamid aus Hexamethylendiamin und Adipinsäure (= Poly(hexamethylenadipamid) oder PA 66), ein Copolyamid aus Hexamethylendiamin und Dodecandisäure (= PA 612) oder Polyamid 6/66. Der Anteil des aliphatischen (Co-)Polyamids beträgt allgemein 50 bis 94 Gew.-%, bevorzugt 55 bis 85 Gew.-%, besonders bevorzugt 60 bis 80 Gew.-%, jeweils bezogen auf das Gesamtgewicht des Gemisches.

Das glykol- oder polyglykolmodifizierte Polyamid oder Copolyamid umfaßt in einer bevorzugten Ausführungsform
a) mindestens einen Amidanteil mit Einheiten
   a1) aus mindestens bifunktionellen aliphatischen und/oder cycloaliphatischen Aminen (speziell Hexamethylendiamin oder lsophorondiamin) und
      aus mindestens bifunktionellen aliphatischen und/oder cycloaliphatischen und/oder aromatischen Carbonsäuren (speziell Adipinsäure, Sebacinsäure, Cyclohexandicarbonsäure, Isophthalsäure oder Trimellitsäure), oder
   a2) aus aliphatischen Aminocarbonsäuren, insbesondere ω-Aminocarbonsäuren, oder deren Lactamen (speziell ε-Caprolactam oder ω-Laurinlactam) oder
   a3) Mischungen von a1) und a2) und
b) mindestens einen Glykol- oder Polyglykolanteil mit Einheiten
   b1) aus einem mindestens bifunktionellen, aliphatischen und/oder cycloaliphatischen Alkohol mit 2 bis 15 Kohlenstoffatomen, insbesondere 2 bis 6 Kohlenstoffatomen (speziell Ethylenglykol, Propan-1,2-diol, Propan-1,3-diol, Butan-1,4-diol oder Trimethylolpropan) oder
   b2) aus mindestens einem Oligo- oder Polyglykol aus einem der in b1) genannten Alkohole (speziell Diethylenglykol, Triethylenglykol, Polyethylenglykol oder Poly(1,2-propylenglykol)) oder
   b3) aus mindestens einem aliphatischen Oligo- oder Polyglykol der in b2) genannten Art, deren endständige Hydroxygruppen durch Aminogruppen ersetzt sind (®Jeffamine) oder
   b4) aus einer Mischung von b1), b2) und/oder b3) oder
   b5) aus einem esterhaltigen polyglykolischen Anteil, gebildet aus mindestens bifunktionellen, aliphatischen Alkoholen (speziell Ethylenglykol oder 1,2-Propylenglykol) und mindestens zweiwertigen aliphatischen, cycloaliphatischen und/oder aromatischen Dicarbonsäuren (speziell Adipinsäure, Sebacinsäure oder Isophthalsäure) oder
   b6) aus einer Mischung von b1), b2) und/oder b5).

Vorzugsweise enthält das modifizierte Polyamid neben den genannten Bestandteilen keine weiteren.

Die polyglykolischen Anteile umfassen vorzugsweise jeweils 5 bis 20 Glykoleinheiten, bevorzugt 7 bis 15 Glykoleinheiten, besonders bevorzugt etwa 10 Glykoleinheiten. Das genannte modifizierte (Co-)Polyamid ist demgemäß bevorzugt ein Blockcopolymer.

Der Anteil an glykol- oder polyglykolmodifizierten Polyamiden beträgt allgemein 5 bis 49 Gew.-%, bevorzugt 10 bis 38 Gew.-%, besonders bevorzugt 15 bis 35 Gew.-%, jeweils bezogen auf das Gesamtgewicht des Gemisches. Glykol- oder polyglykolmodifizierte Polyamide sind bekannt und beispielsweise in der US-A 4,501,861 beschrieben.

Die Blasenbildner sind partikelförmige Substanzen, die sich in 2 Gruppen einteilen lassen. Zum einen sind es praktisch inerte Substanzen, die beim Verstrecken der Hülle Vakuolen hervorrufen, zum anderen reaktive Substanzen, die unter der Einwirkung von Hitze und/oder Strahlung ein Gas generieren, das Blasen in der Folie bildet.

Zu der erstgenannten Gruppe gehören feinkömige, anorganische Partikel, die eine relativ geringe Haftung zu den in der Hülle eingesetzten Polymeren aufweisen. Das sind beispielsweise Partikel aus Calciumcarbonat, aus Bariumsulfat oder aus Eisen(III)oxid. Bei der Verstreckung der Hülle bilden sich um die Partikel herum Vakuolen.

Zur zweiten Gruppe gehören feinkörnige, anorganische oder organische Stoffe (Treibmittel), die Kohlendioxid oder andere Gase hervorbringen, wenn sie erhitzt oder bestrahlt werden. Gut geeignet sind beispielsweise Natriumhydrogencarbonat, Ammoniumcarbamat, Azodicarbonamid oder Zitronensäure. Besonders bevorzugt sind Treibmittel, die vollständig in gasförmige Produkte zerfallen. Die von dem Treibmittel gebildeten Gase erzeugen allgemein kugelförmige, linsenförmige oder oval geformte Blasen. Es können auch Mischungen mit jeweils mindestens einem der genannten inerten und reaktiven Blasenbildner verwendet werden. Die Blasenbildner werden bevorzugt in Form eines Masterbatches eingesetzt. Als Trägermaterial für das Masterbatch sind beispielsweise Polyamide (insbesondere aliphatische Copolyamide) oder ein Wachs geeignet.

Der Anteil an Blasenbildner(n) beträgt allgemein 1 bis 20 Gew.-%, bevorzugt 2 bis 15 Gew.-%, besonders bevorzugt 5 bis 12 Gew.-%, jeweils bezogen auf das Gesamtgewicht des Gemisches.

Gegebenenfalls enthält die Hülle noch übliche Additive, wie Stabilisatoren, Gleitmittel, Antiblockpigmente, anorganische oder organische Farbpigmente.

Gegenstand der vorliegenden Erfindung ist auch ein Verfahren zur Herstellung der nahtlosen, schlauchförmigen Hülle. Die Herstellung erfolgt allgemein durch Extrusionsverfahren, die dem Fachmann an sich bekannt sind. Dabei wird das oben beschriebene Gemisch in einem Extruder aufgeschmolzen, plastifiziert und gleichzeitig verdichtet. Die reaktiven Blasenbildner können dabei bereits zerfallen, wobei die entstehenden Gase aufgrund des hohen Drucks im Extruder jedoch noch keine Blasen bilden können. Die Schmelze wird dann durch eine Ringdüse extrudiert. Dabei bildet sich ein Primärschlauch mit einer relativ hohen Wandstärke. Durch die plötzliche Entspannung nach der Extrusion können gegebenenfalls in dem Polymermaterial vorhandene Gase expandieren und Blasen bilden. Der Primärschlauch wird anschließend rasch äbgekühlt, um den amorphen Zustand der Polymere einzufrieren. Anschließend wird er dann wieder erwärmt auf die zum Verstrecken erforderliche Temperatur, beispielsweise etwa 80 °C. Verstreckt wird der Schlauch dann in Längs- und in Querrichtung, was vorzugsweise in einem Arbeitsgang durchgeführt wird. Die Längsverstreckung wird üblicherweise mit Hilfe von 2 Quetschwalzenpaaren mit steigender Antriebsgeschwindigkeit vorgenommen; die Querverstreckung wird allgemein durch einen von innen auf die Wände des Schlauches wirkenden Gasdruck bewirkt. Das Flächenstreckverhältnis (das ist das Produkt aus Längs- und Querstreckverhältnis) beträgt liegt allgemein bei etwa 6 bis 18, bevorzugt bei etwa 8 bis 11.

Es war überraschend, daß sich bei diesen relativ geringen Flächenstreckverhältnissen bereits Vakuolen um die inerten Blasenbildner herum bilden. Weiterhin war unerwartet, daß weder die inerten noch die reaktiven Blasenbildner beim Verstrecken den Schlauch platzen oder aufreißen lassen. Die Blasen und/oder Vakuolen steigem die Rauchdurchlässigkeit der Hülle deutlich.

Nach dem Verstrecken wird der Schlauch vorzugsweise noch thermofixiert. Damit lassen sich die gewünschten Schrumpfeigenschaften exakt einstellen. Schließlich wird der Schlauch abgekühlt, flachgelegt und aufgewickelt.

In einer besonderen Ausführungsform wird der Schlauch anschließend verkranzt. Dazu wird der Schlauch aufgeblasen, einseitig erwärmt (in der Regel berührungslos durch Strahlungshitze) und dann in erwärmtem Zustand gebogen, so daß er eine ring- oder spiralförmige Form annimmt. Verfahren und Vorrichtungen zum Verkranzen sind dem Fachmann allgemein bekannt und auch in der Patentliteratur beschrieben.

Bei der Herstellung der in den nachfolgenden Beispielen genannten Hüllen wurden die folgenden Ausgangsmaterialien eingesetzt:
(Poly-)Glykol-modifizierte Polyamide (PAG):
   - PAG1:: Copolymer auf Basis von Hexamethylendiamin, Adipinsäure, Sebacinsäure und Polyethylenglykol (mit durchschnittlich etwa 10 Ethylenglykol-Einheiten); Schmelzpunkt 210 °C (bestimmt durch Differential Scanning Calorimetry, DSC), ®Grilon FE 7012 der Ems-Chemie AG,
   - PAG2:: Copolymer auf Basis von Hexamethylendiamin, Adipinsäure, Butan-1,4-diol und Diethylenglykol; Schmelzpunkt 166 °C (bestimmt durch DSC), BAK 402-005 der Bayer AG,
   - PAG3:: Copolymer auf Basis von ε-Caprolactam und Polyethylenglykol; Schmelzpunkt: 158 °C (bestimmt durch DSC),®Pebax MV 1074 der Elf Atochem S.A.)

### Aliphatisches Polyamid (PA):

- PA1:: Polyamid 6 mit einer relativen Viskosität von 4 (gemessen in 96 %iger Schwefelsäure), ®Ultramid B4 der BASF AG
- PA2:: Polyamid 6/66 (Gewichtsverhältnis 85 : 15 Gewichtsteile) mit einer relativen Viskosität von 4 (gemessen in 96%iger Schwefelsäure), ®Ultramid C4 der BASF AG

### Blasenbildner (BB):

- BB1:: Masterbatch aus 50 Gew.-% feinstkömigem Calciumcarbonat und 50 Gew.-% Polyamid 6 (wie PA1); HT-MAB-PA 9098 von Fa. Treffert, Bingen)
- BB2:: Masterbatch aus 25 Gew.-% Fe₂O₃ und 75 Gew.-% Polyamid 6 (wie PA1); 5017-BN-72 von Wilson Color
- BB3:: Masterbatch auf Wachsbasis, enthaltend Natriumhydrogencarbonat und Citronensäure (beide zusammen 40 Gew.-%), ®Hydrocerol 450 der Clariant Masterbatch GmbH,

Prozente sind in den folgenden Beispielen Gewichtsprozente, soweit nicht anders angegeben.

### Beispiel 1

Ein Gemisch aus 35 % PAG1, 30 % PA1, 27 % PA2, 4 % BB1 und 4 % BB2 wurde in einem Einschneckenextruder bei 240 °C zu einer homogenen Schmelze plastifiziert und bei gleicher Temperatur durch eine Ringdüse zu einem Primärschlauch extrudiert. Der Schlauch wurde schnell abgekühlt, dann auf die zum Verstrecken erforderliche Mindesttemperatur (etwa 70 °C) erwärmt, mit Hilfe von innen wirkender Preßluft biaxial verstreckt und anschließend in einer weiteren Heizzone thermofixiert. Durch die Thermofixierung reduzierte sich die Querverstreckung um etwa 10 %. Die fertige Hülle wies Vakuolen um die Partikel herum auf.

Die Streckverhältnisse der fertigen Nahrungsmittelhüllen sind in der nachfolgenden Tabelle 1 zusammengestellt. Die Wandstärke der fertigen Hülle betrug in diesem wie auch in allen folgenden Beispielen und Vergleichsbeispielen jeweils 25 µm.

### Beispiel 2

Ein Gemisch aus 30 % PAG 1, 32 % PA1, 32 % PA2, 4 % BB2 und 2 % BB3 wurde wie im Beispiel 1 beschrieben plastifiziert und extrudiert. Unmittelbar nach Verlassen der Ringdüse bildeten sich in der Schmelze spontan kleinste geschlossene Blasen. Der Primärschlauch wurde wie im Beispiel 1 beschrieben verstreckt und thermofixiert. Die Streckparameter sind in Tabelle 1 zusammengestellt.

### Beispiel 3

Eine Mischung aus 20 % PAG2, 10 Gew.-% PA1, 62 Gew.-% PA2 und 8 % BB1 wurde wie im Beispiel 1 zu einer biaxial verstreckten und thermofixierten, nahtlosen schlauchförmigen Hülle verarbeitet. Nach dem Verstrecken wies die Hülle Vakuolen auf.

### Beispiel 4

Eine Mischung aus 20 % PAG 3, 66 % PA1, 10 % PA2 und 4 % BB1 wurde wie im Beispiel 1 zu einer biaxial verstreckten und thermofixierten, nahtlosen Hülle verarbeitet. Auch diese Hülle wies nach dem Verstrecken Vakuolen auf.

### Vergleichsbeispiel 1 (ohne (poly-)glykol-modifiziertes Polyamid)

Ein Gemisch aus 60 % PA1, 30 % PA2 und 10 % BB1 wurde wie im Beispiel 1 beschrieben zu einer biaxial verstreckten und thermofixierten, nahtlosen Hülle verarbeitet. Die fertige Hülle enthielt Vakuolen.

### Vergleichsbeispiel 2 (ohne Blasenbildner)

Ein Gemisch aus 30 % PAG 1 und 70 % PA2 wurde wie im Beispiel 1 beschrieben zu biaxial verstreckten und thermofixierten, nahtlosen Hülle verarbeitet. In der fertigen Hülle waren keine Blasen oder Vakuolen nachweisbar.

**Tabelle 1**

| Beispiel | Primärschlauchdurchmesser [mm] | Gesamtquerreckgrad | Gesamtlängsreckgrad | Durchmesser des fertigen Schlauches [mm] |
|---|---|---|---|---|
| 1 | 14 | 2,83 | 2,88 | 40 |
| 2 | 14 | 2,83 | 2,88 | 40 |
| 3 | 16 | 3,13 | 2,62 | 50 |
| 4 | 17 | 3,23 | 2,62 | 55 |
| V1 | 20 | 3,1 | 2,62 | 62 |
| V2 | 14 | 3,23 | 2,62 | 45 |

In der nachfolgenden Tabelle 2 sind die weiteren Eigenschaften der Hüllen zusammengestellt.

**Tabelle 2**

| Beispiel | Wasserdampfdurchlässigkeit)¹ [g/m² d] | Reißfestigkeit)² längs/ quer [N/mm²] | Reißdehnung)² längs/ quer [N/mm²] | **Ergebnisse des Wurst-Fülltests)**^{**3**} | | | |
|---|---|---|---|---|---|---|---|
| | | | | Prallhelt)⁴ | Schäl barkelt)⁵ | Rauchfarbe)⁶ | Rauchgeschmack)⁷ |
| 1 | 75 | 100/110 | 85/95 | 1 | 1 | 7 | 8 |
| 2 | 73 | 120/145 | 95/100 | 1 | 1 | 7 | 8 |
| 3 | 50 | 90/95 | 100/110 | 1 | 1 | 5 | 5 |
| 4 | 49 | 80/100 | 115/175 | 2 | 1 | 5 | 6 |
| V1 | 35 | 95/110 | 90/80 | 1 | 1 | 2 | 3 |
| V2 | 41 | ― | ― | 1 | 2 | 3 | 4 |

Tabelle 2 zeigt, daß das Wurstbrät in den erfindungsgemäßen Hüllen nach dem Räuchern deutlich tiefer gefärbt ist und einen intensiveren Räuchergeschmack aufweist.

Erläuterungen zu den Prüfparametem in Tabelle 2:
)¹ Die Hülle wurde einseitig mit Luft einer relativen Feuchte von 85 % bei 23 °C beaufschlagt. Die Bestimmung der Wasserdampfdurchlässigkeit erfolgte gemäß DIN 53122.
)² bestimmt gemäß DIN 53455 an 30 min lang gewässerten Proben von 15 mm Breite bei einer Einspannlänge von 50 mm
)³ Hüllenabschnitte wurden 30 min lang gewässert, anschließend bei konstantem Fülldruck mit feinkömigem Brühwurstbrät gefüllt und an den Enden mit Metallclips verschlossen. Dann wurden die Würste in einem Brühschrank mit Raucherzeuger 30 min lang mit rauchgesättigtem Wasserdampf bei 75 °C behandelt, anschließend 60 min. lang mit Wasserdampf ohne Rauch bei 80 °C gegart. Die Würste wurden an der Luft auf Raumtemperatur abgekühlt und dann in einem Kühlraum bei etwa 6 °C gelagert.
)⁴ subjektives Urteil über Faltenfreiheit und Konsistenz der Würste (1 = einwandfrei, 3 = deutliche Faltenbildung)
)⁵ beurteilt wurde, wie sich die Hülle nach dem Einschneiden abringeln ließ (1 = einwandfrei; 5 = Brät bleibt vollflächig an der Innenseite der Hülle hängen)
)⁶ Maß für die Braunfärbung der Brätoberfläche nach dem Abschälen der Hülle (10 = sehr dunkle Farbe, wie bei Würsten in Cellulosehülle; 0 = kein Farbunterschied zum Innern des Bräts)
)⁷ subjektives Urteil aus Verkostungstest durch eine Reihe von 4 Probanden (10 = sehr starker Rauchgeschmack, wie bei Würsten in Cellulosehülle; 0 = kein Rauchgeschmack, wie bei ungeräucherter Brühwurst)

## Patentansprüche

1. Rauchdurchlässige, nahtlose, schlauchförmige, biaxial orientierte, thermofixierte Nahrungsmittelhülle auf Polyamidbasis, **dadurch gekennzeichnet, daß** sie ein Gemisch umfaßt aus
- mindestens einem aliphatischen Polyamid und/oder mindestens einem aliphatischen Copolyamid,
- mindestens einem aliphatischen und/oder teilaromatischen Polyamid oder mindestens einem aliphatischen und/oder teilaromatischen Copolyamid, das jeweils modifiziert ist mit Glykol oder Polyglykol, und
- mindestens einem Blasenbildner.

2. Nahrungsmittelhülle gemäß Anspruch 1, **dadurch gekennzeichnet, daß** das aliphatische Polyamid oder Copolyamid Polamid 6, Polyamid 66, Polyamid 612 oder Polyamid 6/66 ist.

3. Nahningsmittelhülle gemäß Anspruch 1, **dadurch gekennzeichnet, daß** der Anteil des aliphatischen Polyamids oder Copolyamids 50 bis 94 Gew.-%, bevorzugt 55 bis 85 Gew.-%, besonders bevorzugt 60 bis 80 Gew.-%, jeweils bezogen auf das Gesamtgewicht des Gemisches, beträgt.

4. Nahrungsmittelhülle gemäß einem oder mehreren der Ansprüche 1 bis 3, **dadurch gekennzeichnet, daß** das glykol- oder polyglykolmodifizierte Polyamid oder Copolyamid
a) mindestens einen Amidanteil mit Einheiten
a1) aus mindestens bifunktionellen aliphatischen und/oder cycloaliphatischen Aminen und aus mindestens bifunktionellen aliphatischen und/oder cycloaliphatischen und/oder aromatischen Carbonsäuren, oder
a2) aus aliphatischen Aminocarbonsäuren, insbesondere ω-Aminocarbonsäuren, oder deren Lactamen oder
a3) Mischungen von a1) und a2) und
b) mindestens einen Glykol- oder Polyglykolanteil mit Einheiten
b1) aus einem mindestens bifunktionellen, aliphatischen und/oder cycloaliphatischen Alkohol mit 2 bis 15 Kohlenstoffatomen, insbesondere 2 bis 6 Kohlenstoffatomen oder
b2) aus mindestens einem Oligo- oder Polyglykol aus einem der in b1) genannten Alkohole oder
b3) aus mindestens einem Oligo- oder Polyglykol der in b2) genannten Art, deren endständige Hydroxygruppen durch Aminogruppen ersetzt sind oder
b4) aus eine Mischung von b1), b2) und/oder b3) oder
b5) aus einem esterhaltigen polyglykolischen Anteil, gebildet aus mindestens bifunktionellen, aliphatischen Alkoholen und mindestens zweiwertigen aliphatischen, cycloaliphatischen und/oder aromatischen Dicarbonsäuren oder
b6) aus einer Mischung von b1), b2) und/oder b5)
umfaßt.

5. Nahrungsmittelhülle gemäß einem öder mehreren der Ansprüche 1 bis 4, **dadurch gekennzeichnet, daß** der Anteil an glykol- oder polyglykolmodifizierten Polyamiden 5 bis 49 Gew.-%, bevorzugt 10 bis 38 Gew.-%, besonders bevorzugt 15 bis 35 Gew.-%, jeweils bezogen auf das Gesamtgewicht des Gemisches, beträgt.

6. Nahrungsmittelhülle gemäß einem oder mehreren der Ansprüche 1 bis 5, **dadurch gekennzeichnet, daß** der Blasenbildner eine praktisch inerte, partikelförmige Substanz ist, die beim Verstrecken der Hülle Vakuolen hervorruft.

7. Nahrungsmittelhülle gemäß Anspruch 6, **dadurch gekennzeichnet, daß** der inerte Blasenbildner aus Calciumcarbonat, Bariumsulfat oder Eisen(III)oxid besteht.

8. Nahrungsmittelhülle gemäß einem oder mehreren der Ansprüche 1 bis 5, **dadurch gekennzeichnet, daß** der Blasenbildner eine reaktive, partikelförmige Substanz ist, die unter der Einwirkung von Hitze und/oder Strahlung ein Gas generiert, das Blasen in der Hülle hervorruft.

9. Nahrungsmittelhülle gemäß Anspruch 8, **dadurch gekennzeichnet, daß** der reaktive Blasenbildner aus Natriumhydrogencarbonat, Ammoniumcarbamat, Azodicarbonamid oder Zitronensäure besteht.

10. Nahrungsmittelhülle gemäß einem oder mehreren der Ansprüche 1 bis 9, **dadurch gekennzeichnet, daß** der Anteil an Blasenbildnern1 bis 20 Gew.-%, bevorzugt 2 bis 15 Gew.-%, besonders bevorzugt 5 bis 12 Gew.-%, jeweils bezogen auf das Gesamtgewicht des Gemisches, beträgt.

11. Nahrungsmittelhülle gemäß einem oder mehreren der Ansprüche 1 bis 10, **dadurch gekennzeichnet, daß** sie eine ring- oder spiralförmige Form hat.

12. Nahrungsmittelhülle gemäß Anspruch 1 oder 2, **dadurch gekennzeichnet, daß** sie in einem Flächenstreckverhältnis von 6 bis 18, bevorzugt 8 bis 11, verstreckt ist.

13. Verwendung der Nahrungmittelhülle gemäß einem oder mehreren der Ansprüche 1 bis 12 als künstliche Wursthülle.

## Claims

1. A smoke-permeable, seamless, tubular, biaxially oriented and heat-set polyamide-based food casing wherein it comprises a mixture of
- at least one aliphatic polyamide and/or at least one aliphatic copolyamide,
- at least one aliphatic and/or partially aromatic polyamide or at least one aliphatic and/or partially aromatic copolyamide, each of which is modified with glycol or polyglycol, and
- at least one bubbling agent.

2. The food casing as claimed in claim 1, wherein the aliphatic polyamide or copolyamide is nylon 6, nylon 66, nylon 612 or nylon 6/66.

3. The food casing as claimed in claim 1, wherein the content of the aliphatic polyamide or copolyamide is from 50 to 94% by weight, preferably from 55 to 85% by weight, particularly preferably from 60 to 80% by weight, in each case based on the total weight of the mixture.

4. The food casing as claimed in one or more of claims 1 to 3, wherein the glycol- or polyglycol-modified polyamide or copolyamide comprises
a) at least one amide moiety having units
a1) of at least bifunctional aliphatic and/or cycloaliphatic amines and of at least bifunctional aliphatic and/or cycloaliphatic and/or aromatic carboxylic acids, or
a2) of aliphatic aminocarboxylic acids, in particular ω-aminocarboxylic acids, or their lactams or
a3) mixtures of a1) and a2) and
b) at least one glycol or polyglycol moiety having units
b1) of one at least bifunctional, aliphatic and/or cycloaliphatic alcohol having from 2 to 15 carbons, in particular from 2 to 6 carbons or
b2) of at least one oligo- or polyglycol of one of the alcohols specified in b1) or
b3) of at least one oligo- or polyglycol of the type specified in b2), the terminal hydroxyl groups of which are replaced by amino groups or
b4) of a mixture of b1), b2) and/or b3) or
b5) of an ester-containing polyglycolic moiety formed from at least bifunctional aliphatic alcohols and at least divalent aliphatic, cycloaliphatic and/or aromatic dicarboxylic acids or
b6) of a mixture of b1), b2) and/or b5).

5. The food casing as claimed in one or more of claims 1 to 4, wherein the content of glycol- or polyglycol-modified polyamides is from 5 to 49% by weight, preferably from 10 to 38% by weight, particularly preferably from 15 to 35% by weight, in each case based on the total weight of the mixture.

6. The food casing as claimed in one or more of claims 1 to 5, wherein the bubbling agent is a virtually inert particulate substance which gives rise to vacuoles when the casing is stretched.

7. The food casing as claimed in claim 6, wherein the inert bubbling agent consists of calcium carbonate, barium sulfate or iron(III) oxide.

8. The food casing as claimed in one or more of claims 1 to 5, wherein the bubbling agent is a reactive particulate substance which, under the action of heat and/or radiation, generates a gas which gives rise to bubbles in the casing.

9. The food casing as claimed in claim 8, wherein the reactive bubbling agent consists of sodium hydrogen carbonate, ammonium carbamate, azodicarbonamide or citric acid.

10. The food casing as claimed in one or more of claims 1 to 9, wherein the content of bubbling agent(s) is from 1 to 20% by weight, preferably from 2 to 15% by weight, particularly preferably from 5 to 12% by weight, in each case based on the total weight of the mixture.

11. The food casing as claimed in one or more of claims 1 to 10, wherein it has a ring or spiral shape.

12. The food casing as claimed in claim 1 or 2, wherein it is stretched in an area stretch ratio of from 6 to 18, preferably from 8 to 11.

13. The use of the food casing as claimed in one or more of claims 1 to 12 as artificial sausage casing.

## Revendications

1. Enveloppe de produit alimentaire à base de polyamide, fixée par voie thermique, orientée de manière bi-axiale, tubulaire, sans joints, perméable à la fumée, **caractérisée en ce qu'**elle comprend un mélange :
• d'au moins un polyamide aliphatique et/ou d'au moins un copolyamide aliphatique,
• d'au moins un polyamide aliphatique et/ou partiellement aromatique ou d'au moins un copolyamide aliphatique et/ou partiellement aromatique, qui est, à chaque fois, modifié à l'aide de glycol ou de polyglycol, et
• d'au moins un agent de formation de bulles.

2. Enveloppe de produit alimentaire selon la revendication 1, **caractérisée en ce que** le polyamide ou le copolyamide aliphatique est le polyamide 6, le polyamide 66, le polyamide 612 ou le polyamide 6/66.

3. Enveloppe de produit alimentaire selon la revendication 1, **caractérisée en ce que** la proportion du polyamide ou du copolyamide aliphatique est de 50 à 94% en poids, de préférence, de 55 à 85% en poids, en particulier, de 60 à 80% en poids, respectivement par rapport au poids total du mélange.

4. Enveloppe de produit alimentaire selon une ou plusieurs des revendications 1 à 3, **caractérisée en ce que** le polyamide ou le copolyamide modifié au glycol ou au polyglycol contient
a) au moins une portion d'amide ayant des unités composées
a1) d'amines aliphatiques et/ou cycloaliphatiques au moins bifonctionnelles et d'acides carboxyliques aliphatiques et/ou cycloaliphatiques et/ou aromatiques au moins bifonctionnels ou
a2) d'acides aminocarboxyliques aliphatiques, en particulier d'acides 3-aminocarboxyliques ou de leurs lactames ou
a3) de mélanges de a1) et de a2) et
b) d'au moins une portion de glycol ou de polyglycol ayant des unités composées
b1) d'un alcool aliphatique et/ou cycloaliphatique au moins bifonctionnel, ayant de 2 à 15 atomes de carbone, en particulier de 2 à 6 atomes de carbone ou
b2) d'au moins un oligoglycol ou un polyglycol provenant d'un des alcools cités en b1) ou
b3) d'au moins un oligoglycol ou un polyglycol du type cité en b2), dont les groupements hydroxy terminaux sont remplacés par des groupements amino ou
b4) d'au moins un mélange de b1), b2) et/ou b3) ou
b5) d'une portion polyglycolique contenant des esters, formée d'alcools aliphatiques au moins bifonctionnels et d'acides dicarboxyliques aliphatiques, cycloaliphatiques et/ou aromatiques au moins divalents ou
b6) d'au moins un mélange de b1), b2) et/ou b5).

5. Enveloppe de produit alimentaire selon une ou plusieurs des revendications 1 à 4, **caractérisée en ce que** la proportion en polyamides modifiés au glycol ou au polyglycol est de 5 à 49% en poids, de préférence de 10 à 38% en poids, et en particulier de 15 à 35% en poids, respectivement par rapport au poids total du mélange.

6. Enveloppe de produit alimentaire selon une ou plusieurs des revendications 1 à 5, **caractérisée en ce que** l'agent de formation de bulles est une substance pratiquement inerte, formée de particules, qui provoque, lors de l'étirage de l'enveloppe, la formation de vacuoles.

7. Enveloppe de produit alimentaire selon la revendication 6, **caractérisée en ce que** l'agent de formation de bulles inerte se compose de carbonate de calcium, de sulfate de baryum ou d'oxyde de fer (III).

8. Enveloppe de produit alimentaire selon une ou plusieurs des revendications 1 à 5, **caractérisée en ce que** l'agent de formation de bulles est une substance réactive, formée de particules, qui engendre, sous l'effet de chaleur et/ou de rayonnement, un gaz qui provoque la formation de bulles dans l'enveloppe.

9. Enveloppe de produit alimentaire selon la revendication 8, **caractérisée en ce que** l'agent de formation de bulles réactif se compose d'hydrogénocarbonate de sodium, de carbamate d'ammonium, d'azodicarbonamide ou d'acide citrique.

10. Enveloppe de produit alimentaire selon une ou plusieurs des revendications 1 à 9, **caractérisée en ce que** la proportion en agents de formation de bulles est de 1 à 20% en poids, de préférence, de 2 à 15% en poids et, en particulier, 5 à 12% en poids, respectivement par rapport au poids total du mélange.

11. Enveloppe de produit alimentaire selon une ou plusieurs des revendications 1 à 10, **caractérisée en ce qu'**elle a une forme annulaire ou une forme en spirale.

12. Enveloppe de produit alimentaire selon la revendication 1 ou 2, **caractérisée en ce qu'**elle est étirée dans un rapport d'étirage surfacique de 6 à 18, de préférence de 8 à 11.

13. Utilisation de l'enveloppe de produit alimentaire selon une ou plusieurs des revendications 1 à 12, en tant qu'enveloppe synthétique de saucisse.
